# EUROPEAN PATENT SPECIFICATION

(11) **EP 4 427 960 B1**
(45) Date of publication and mention of the grant of the patent: **18.11.2026**
(21) Application number: 24158156.0
(22) Date of filing: 16.02.2024
(51) Int. Cl.: B60K 1/04

(54) **VEHICLE, CONTROL DEVICE, AND VEHICLE CONTROL METHOD**
FAHRZEUG, STEUERUNGSVORRICHTUNG UND FAHRZEUGSTEUERUNGSVERFAHREN
VÉHICULE, DISPOSITIF DE COMMANDE ET PROCÉDÉ DE COMMANDE DE VÉHICULE

(30) Priority: 09.03.2023 JP 2023036777
(43) Date of publication of application: 11.09.2024
(73) Proprietor: Toyota Jidosha Kabushiki Kaisha, Toyota-shi, Aichi-Ken 471-8571 (JP)
(72) Inventor: HAGIWARA, Hideki, Toyota-shi, 471-8571 (JP); NAGASE, Hiroshi, Toyota-shi, 471-8571 (JP); OGUMA, Yasumasa, Toyota-shi, 471-8571 (JP); YOSHIDA, Jun, Toyota-shi, 471-8571 (JP); MIGITA, Tsubasa, Toyota-shi, 471-8571 (JP); UCHIDA, Yoshihiro, Toyota-shi, 471-8571 (JP)
(74) Representative: D Young & Co LLP

(56) References cited:
- JP-A- 2021 078 214
- JP-A- 2022 046 077
- US-A1- 2022 041 052

## Description

### BACKGROUND OF THE INVENTION

### 1. Field of the Invention

The present disclosure relates to a vehicle, a control device, and a vehicle control method.

### 2. Description of Related Art

Japanese Unexamined Patent Application Publication No. 2022-046077 discloses a secondary battery using a sulfur-based material as a solid electrolyte. When generation of hydrogen sulfide is predicted or detected in the secondary battery, the secondary battery is cooled by a cooler.
JP 2022046077 A discloses a battery system and battery cooling method. JP 2022046077 A does not disclose a case that accommodates the all-solid-state battery, wherein when gas is generated in the case, a blocking process is configured to be executed to separate a vehicle cabin from outside air.

### SUMMARY OF THE INVENTION

However, when the above-described secondary battery is mounted in a vehicle, even if the secondary battery (all-solid-state battery) is cooled, generated hydrogen sulfide may enter a vehicle cabin.

The present invention provides a vehicle, a control device, and a vehicle control method that can suppress gas generated from an all-solid-state battery from entering a vehicle cabin.

A first aspect of the present invention relates to a vehicle on which an all-solid-state battery is mounted, the vehicle including the all-solid-state battery, and a case that accommodates the all-solid-state battery. The vehicle is configured such that, when gas is generated in the case, a blocking process is executed to separate a vehicle cabin from outside air.

In the above-described configuration, as described above, when gas is generated in the case, the blocking process is executed to separate the vehicle cabin from the outside air. As a result, the gas can be suppressed from entering the vehicle cabin from the outside of the vehicle.

The vehicle according to the first aspect may further include at least one window that is openable and closable and blocks between the vehicle cabin and the outside air. The blocking process may include a process of closing the at least one window. With this configuration, by closing the at least one window, it is possible to easily suppress the gas from entering the vehicle cabin from the outside of the vehicle.

The vehicle according to the first aspect may further include an air conditioner that adjusts the room temperature in the vehicle cabin. The blocking process may include a process of switching an air circulation path by the air conditioner to an inside air circulation path. With this configuration, it is possible to more reliably suppress the gas from entering the vehicle cabin from the outside of the vehicle, as compared with the case where the air circulation path is an outside air circulation path.

In the vehicle according to the first aspect, the inside air circulation path may include a first inside air circulation path in which a gas adsorbent that adsorbs the gas is arranged and a second inside air circulation path in which the gas adsorbent is not arranged. The blocking process may include a process of switching the air circulation path from the second inside air circulation path to the first inside air circulation path. With this configuration, the gas can be adsorbed by the gas adsorbent while suppressing gas from entering the vehicle cabin from the outside of the vehicle.

The vehicle according to the first aspect may further include an exhaust unit that exhausts air in the vehicle cabin. When the gas is generated in the case, the vehicle may further execute a process of exhausting the air in the vehicle cabin using the exhaust unit. With this configuration, even when the gas enters the vehicle cabin, the gas in the vehicle cabin can be exhausted.

In the vehicle according to the first aspect, the exhaust unit may be provided at the bottom of the vehicle cabin. With this configuration, the gas heavier than air can be efficiently exhausted from the vehicle cabin through the exhaust unit.

In the vehicle according to the first aspect, in response to an abnormality occurring, including at least one of the case in which the gas is generated in the case and the case in which the gas is expected to be generated in the case, at least one of a process of electrically disconnecting a system main relay of the vehicle, a process of notifying a user of the vehicle of the abnormality, and a process of notifying a terminal of the user of the abnormality may be executed. With this configuration, it is possible to suppress a large current from flowing through the system main relay due to the abnormality. Further, it is possible to reliably notify the user of the abnormality.

A second aspect of the present invention relates to a control device that controls a vehicle on which an all-solid-state battery is mounted. The vehicle includes the all-solid-state battery, and a case that accommodates the all-solid-state battery. The control device includes an acquisition unit that acquires information indicating that gas is generated in the case, and a signal output unit that outputs a signal used to separate a vehicle cabin from outside air in response to acquisition of the information by the acquisition unit.

As described above, the control device according to the second aspect of the present invention outputs the signal used to separate the vehicle cabin from the outside air when the gas is generated in the case. Accordingly, it is possible to provide a control device capable of suppressing the gas from entering the vehicle cabin from the outside of the vehicle.

A third aspect of the present invention relates to a vehicle control method that controls a vehicle on which an all-solid-state battery is mounted. The vehicle includes the all-solid-state battery, and a case that accommodates the all-solid-state battery. The vehicle control method includes detecting generation of gas in the case, and separating a vehicle cabin from the outside air when the gas generated in the case is detected.

In the third aspect of the present invention, as described above, the vehicle cabin is separated from the outside air when the gas is generated in the case. Accordingly, it is possible to provide a vehicle control method capable of suppressing the gas from entering the vehicle cabin from the outside of the vehicle.

According to each aspect of the present disclosure, it is possible to suppress the gas generated from the all-solid-state battery from entering the vehicle cabin.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating the configuration of an electrified vehicle according to an embodiment;
FIG. 2 is a perspective view illustrating the configuration of a battery case according to the embodiment;
FIG. 3 is a cross-sectional view taken along the line III-III in FIG. 2;
FIG. 4A is a plan view of the battery case, and FIG. 4B is a cross-sectional view taken along the line IV-IV in FIG. 4A;
FIG. 5A is a cross-sectional view illustrating the configuration of a unit cell, and FIG. 5B is a perspective view illustrating the configuration of the unit cell;
FIG. 6 is a diagram illustrating the configuration of an air conditioner according to the embodiment;
FIG. 7 is a diagram illustrating the configuration of a travel drive unit according to the embodiment;
FIG. 8 is a diagram illustrating a vehicle control method according to the embodiment;
FIG. 9 is a diagram illustrating details of step S20 in FIG. 8; and
FIG. 10 is a diagram illustrating a vehicle control method according to a modification example of the embodiment.

### DETAILED DESCRIPTION OF EMBODIMENTS

Hereinafter, an embodiment of the present disclosure will be described in detail with reference to the drawings. In addition, the same reference numerals and letters are attached to the same or corresponding parts in the figures, and the description thereof will not be repeated.

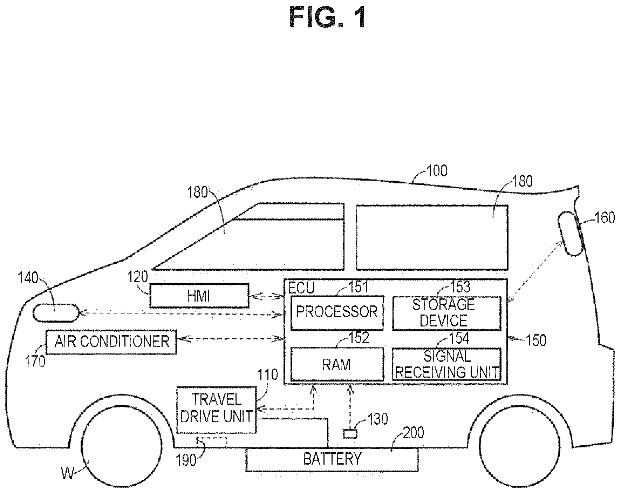

FIG. 1 is a diagram schematically illustrating the overall configuration of an electrified vehicle 100 equipped with a battery system according to the present embodiment. The electrified vehicle 100 includes a battery 200 that stores electric power for traveling. The electrified vehicle 100 is configured to be able to travel using electric power stored in the battery 200. In the present embodiment, the electrified vehicle 100 is a battery electric vehicle (BEV) without an engine (internal combustion engine), but may be a hybrid vehicle (HEV) with an engine or a plug-in hybrid vehicle (PHEV). The electrified vehicle 100 is an example of a "vehicle" in the present disclosure.

The electrified vehicle 100 includes a control device (electronic control unit: ECU) 150. The ECU 150 is configured to perform charge control and discharge control of the battery 200. The ECU 150 includes a processor 151, a random access memory (RAM) 152, a storage device 153, and a signal receiving unit 154. The processor 151 and the signal receiving unit 154 are respectively examples of a "signal output unit" and an "acquisition unit" of the present disclosure. Further, the ECU 150 is an example of a "control device" of the present disclosure.

The ECU 150 may be a computer. The processor 151 may be a central processing unit (CPU).

The RAM 152 functions as a working memory that temporarily stores data processed by the processor 151.

The storage device 153 is configured to be able to save stored information. The storage device 153 stores programs as well as information (for example, maps, formulas, and various parameters) used in the programs. Various controls in the ECU 150 are executed by the processor 151 executing programs stored in the storage device 153.

The signal receiving unit 154 receives a predetermined signal from another device of the ECU 150. For example, the signal receiving unit 154 receives information (signal) indicating that hydrogen sulfide has been generated in a battery case 90 from a hydrogen sulfide sensor 70, which will be described below.

A monitoring module 130 includes various sensors that detect the state (for example, voltage, current, and temperature) of the battery 200, and outputs detection results to the ECU 150. The monitoring module 130 may be a battery management system (BMS) that has, in addition to the above-described sensor functions, a state of charge (SOC) estimation function, a state of health (SOH) estimation function, a cell voltage equalization function, a diagnostic function, and a communication function. The ECU 150 can obtain the state (for example, temperature, current, voltage, SOC, and internal resistance) of the battery 200 based on the output of the monitoring module 130. The battery 200 is charged (externally charged) with electric power supplied from a charging facility.

The electrified vehicle 100 further includes a travel drive unit 110, a human machine interface (HMI) device 120, a hazard lamp 140, an external indicator 160, an air conditioner 170, a plurality of windows 180, an exhaust unit 190, and drive wheels W.

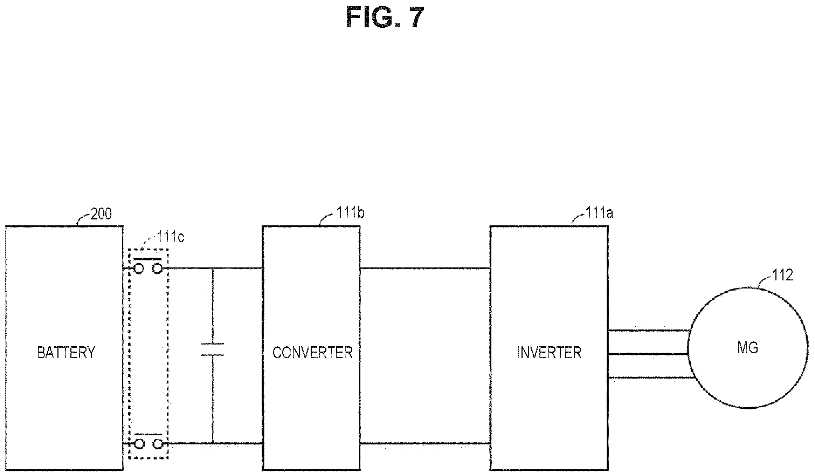

The travel drive unit 110 includes a power control unit (PCU) 111 and a motor generator (MG) 112 (both illustrated in FIG. 7), and is configured to make the electrified vehicle 100 travel using electric power stored in the battery 200.

The PCU 111 includes, for example, an inverter 111a, a converter 111b, and a relay (hereinafter referred to as "system main relay (SMR)") 111c. The PCU 111 is controlled by the ECU 150.

The MG 112 is, for example, a three-phase alternating-current motor generator. The MG 112 is driven by the PCU 111 and is configured to rotate the drive wheels W. The PCU 111 drives the MG 112 using electric power supplied from the battery 200. Further, the MG 112 is configured to perform regenerative electric power generation and supply the generated electric power to the battery 200.

The SMR 111c is configured to switch connection/cutoff of the electric power path from the battery 200 to the PCU 111. The SMR 111c enters a closed state (connected state) when the electrified vehicle 100 is traveling.

Referring again to FIG. 1, the HMI device 120 includes an input device and a display device. The HMI device 120 may include a touch panel display.

The hazard lamps 140 are lamps arranged on the front, rear, left, and right of the electrified vehicle 100. The hazard lamp 140 is the same lamp as the blinker, and functions as an emergency blinking indicator lamp.

The external indicator 160 is, for example, an LED indicator. The external indicator 160 is provided on the rear window, and allows display contents to be viewed from outside of the electrified vehicle 100.

The air conditioner 170 is a device that adjusts the room temperature in a vehicle cabin. The air conditioner 170 is controlled by the ECU 150. Details of the air conditioner 170 will be described below.

The windows 180 are windows that can be opened and closed to shield the inside of the vehicle cabin from outside air. The windows 180 may include, for example, a side window of the electrified vehicle 100 or a sunroof (not illustrated). Opening and closing of the windows 180 is controlled by the ECU 150.

The exhaust unit 190 is configured to exhaust the air in the vehicle cabin to the outside of the electrified vehicle 100. For example, the exhaust unit 190 is configured to be openable and closable by the ECU 150, and exhausts the air in the vehicle cabin in an open state.

As illustrated in FIG. 1, the exhaust unit 190 is provided at the lower part of the vehicle cabin. Although only one exhaust unit 190 is illustrated in FIG. 1, a plurality of exhaust units 190 may be provided. For example, the exhaust unit 190 may be provided in each of the front and rear of the vehicle cabin.

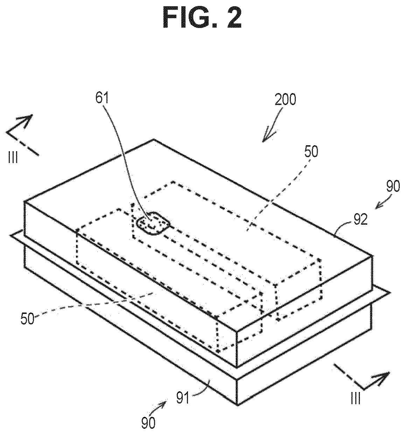

FIG. 2 is a perspective view of the battery 200. The battery 200 includes the battery case 90 and a battery module 50 accommodated in the battery case 90. The battery case 90 and the battery module 50 are respectively examples of a "case" and an "all-solid-state battery".

The battery case 90 includes a lower case 91 and an upper case 92. In the present embodiment, two battery modules 50 are accommodated in a space formed by the lower case 91 and the upper case 92. The upper case 92 is provided with a respiratory membrane 61. The respiratory membrane 61 will be described below. The battery 200 is mounted on the floor of the electrified vehicle 100, and may be installed inside the vehicle cabin of electrified vehicle 100 or outside the vehicle cabin of the electrified vehicle 100.

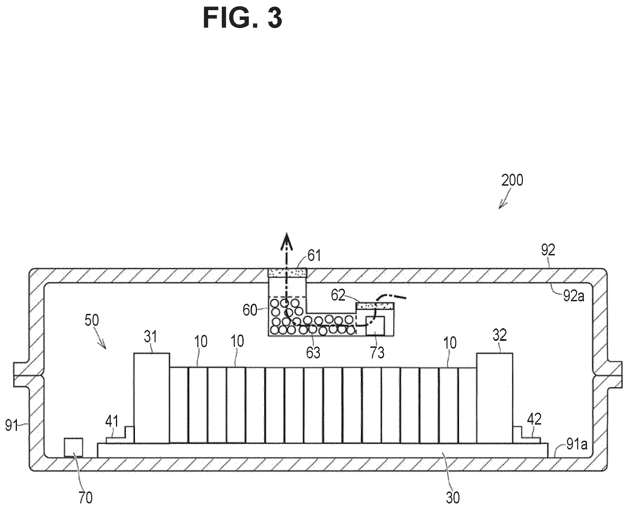

FIG. 3 is a diagram illustrating the schematic configuration of the battery 200. FIG. 3 is a cross section taken along the line III-III in FIG. 2. The battery module 50 is a battery assembly in which a plurality of unit cells 10 is connected. The unit cells 10 are stacked between a pair of end plates 31, 32.

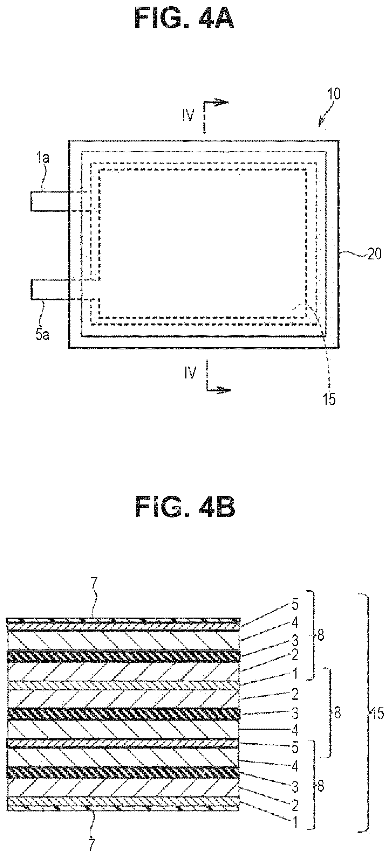

FIGS. 4A and 4B are diagrams illustrating the schematic configuration of the unit cell 10 in the present embodiment. FIG. 4A is a top view of the unit cell 10. The unit cell 10 is a laminate-type all-solid-state battery using a laminate film as an exterior member 20. A negative electrode terminal (negative electrode tab) 1a and a positive electrode terminal (positive electrode tab) 5a protrude from the exterior member 20 of the unit cell 10. The laminate film may be, for example, a pouch made of an aluminum laminate film, or a three-layer film in which an aluminum foil is interposed between resin films.

FIG. 4B is a diagram illustrating an all-solid-state battery stack 15 accommodated in the exterior member 20, and illustrates a cross section taken along the line IV-IV in FIG. 4A. In the all-solid-state battery stack 15, three all-solid-state battery elements 8, in each of which a negative electrode current collector layer 1, a negative electrode active material layer 2, a solid electrolyte layer 3, a positive electrode active material layer 4, and a positive electrode current collector layer 5 are laminated in this order, share the negative electrode current collector layer 1 and the positive electrode current collector layer 5, and are stacked in reverse order. The negative electrode current collector layer 1 is connected to the negative electrode terminal 1a, and the positive electrode current collector layer 5 is connected to the positive electrode terminal 5a. The number of all-solid-state battery elements 8 included in the all-solid-state battery stack 15 may be one, or four or more. An insulating film 7 provides insulation between the all-solid-state battery stack 15 and the exterior member (laminate film) 20.

The unit cell 10 is a sulfide-based all-solid-state battery. In the present disclosure, a sulfide-based all-solid-state battery is one in which at least one of the material of the positive electrode active material layer 4 or the material of the solid electrolyte layer 3 contains a sulfur component. In the present embodiment, the solid electrolyte layer 3 includes a sulfide-based solid electrolyte, and for example, the sulfide-based solid electrolyte may be one using phosphorus pentasulfide (P₂S₅) or lithium sulfide (Li₂S) as a starting material. In this case, the positive electrode active material layer 4 may contain, for example, lithium cobalt oxide, lithium nickel oxide, lithium iron phosphate, or the like. When the solid electrolyte layer 3 is composed of an oxide-based solid electrolyte, the positive electrode active material layer 4 uses a sulfur-based positive electrode active material. The sulfur-based positive electrode active material may be an organic sulfur compound or an inorganic sulfur compound. Both the solid electrolyte layer 3 and the positive electrode active material layer 4 may contain a sulfur component.

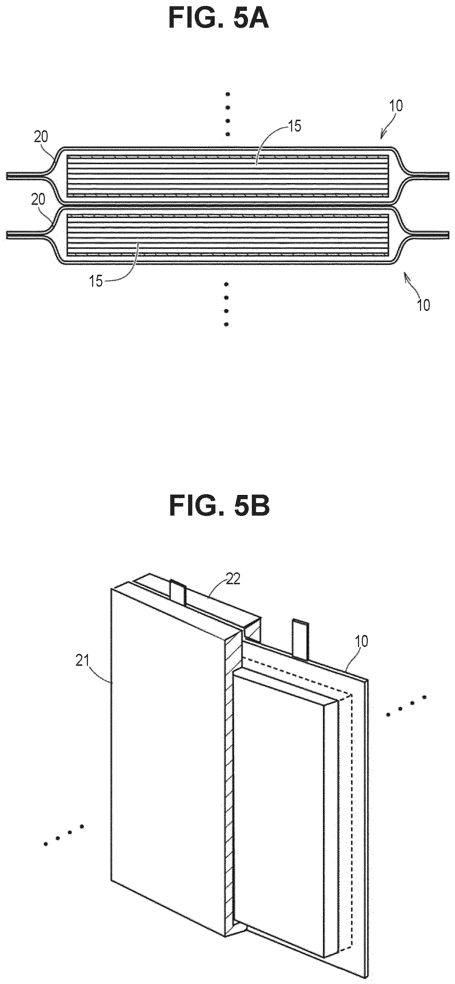

Referring to FIG. 3, the unit cells 10 are arranged between the end plates 31, 32 and stacked. FIGS. 5A and 5B are diagrams illustrating a method of stacking the unit cells 10. The unit cell 10 has a flat plate shape. As illustrated in FIG. 5A, the exterior members 20 of the unit cells 10 may be stacked so as to be in contact with each other. Further, the unit cells 10 may be stacked on each other with a flat plate-shaped spacer (not illustrated) interposed therebetween. In addition, as illustrated in FIG. 5B, the unit cell 10 may be covered with a pair of frames 21, 22 having inner surfaces corresponding to the outer shape of the unit cell 10, and the unit cells 10 covered with the frames 21, 22 may be stacked on each other.

Returning to FIG. 3, the unit cells 10 are pinched between the end plates 31 and 32 in a stacked state, and a predetermined restraining load is applied by a restraining band or the like (not illustrated). The end plates 31, 32 are respectively fixed to a bottom plate 30 by brackets 41, 42.

The battery module 50 consisting of the unit cells 10 stacked between the end plates 31 and 32, the bottom plate 30, and the like is fixed to a bottom surface 91a of the lower case 91. The battery case 90 is a housing that accommodates the battery module 50.

A duct 60 is provided in the upper case 92. The duct 60 is a communication path that communicates the inside and outside of the battery case 90. When the internal pressure of the battery case 90 becomes high, the air inside the battery case 90 is discharged to the outside, whereas when the internal pressure of the battery case 90 becomes low, the air outside of the battery case 90 (outside air) is taken. The duct 60 is attached to an opening formed in a ceiling surface 92a of the upper case 92.

At the ends of the duct 60, respiratory membranes 61, 62 made of air-permeable and waterproof (moisture-permeable and waterproof) sheets are provided. The air-permeable and waterproof (moisture-permeable and waterproof) sheet may be, for example, GORE-TEX (registered trademark). A desulfurizing agent 63 is arranged inside the duct 60. The desulfurizing agent 63 may be, for example, a pellet-shaped desulfurizing agent containing iron oxide as a main component, and chemically adsorbs hydrogen sulfide. When the internal pressure of the battery case 90 increases, the air inside the battery case 90 is discharged to the outside through the duct 60, as illustrated by the dashed-dotted arrow. In this case, hydrogen sulfide contained in the air is chemically adsorbed by the desulfurizing agent 63, and the hydrogen sulfide is removed. In this way, the duct 60 has a function as a desulfurization unit. Hydrogen sulfide is an example of a "gas" in the present disclosure.

The hydrogen sulfide sensor 70 is arranged inside the battery case 90. The hydrogen sulfide sensor 70 is a sensor that detects the concentration of hydrogen sulfide (H₂S) contained in the atmosphere, and outputs a signal indicating the detection result to the ECU 150 (signal receiving unit 154). The hydrogen sulfide sensor 70 may be, for example, a hot wire type semiconductor type sensor or a constant potential electrolytic type sensor. In the present embodiment, the hydrogen sulfide sensor 70 is provided on the bottom surface 91a of the lower case 91, and one hydrogen sulfide sensor 70 is provided around the battery module 50. The arrangement position and number of hydrogen sulfide sensors 70 are not limited to the above example.

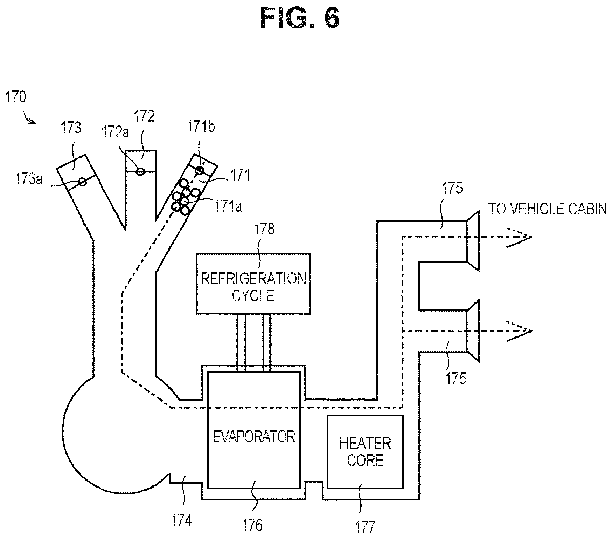

FIG. 6 is a diagram illustrating a detailed configuration of the air conditioner 170. The air conditioner 170 includes a first inside air intake unit 171, a second inside air intake unit 172, an outside air intake unit 173, a duct 174, an exhaust duct 175, an evaporator 176, a heater core 177, and a refrigeration cycle 178. In FIG. 6, an example of air flow is illustrated by a dashed-dotted line.

The first inside air intake unit 171 is an intake port for internal air circulation that takes in air inside the vehicle cabin and introduces it into the duct 174. The first inside air intake unit 171 is provided with an adsorbent 171a that adsorbs hydrogen sulfide. The adsorbent 171a may be made of the same material as the desulfurizing agent 63 (see FIG. 3). A circulation path passing through the first inside air intake unit 171 is an example of a "first inside air circulation path" of the present disclosure.

The first inside air intake unit 171 is provided with an electromagnetic valve 171b for controlling conduction of the first inside air intake unit 171. The opening and closing of the electromagnetic valve 171b is controlled by the ECU 150.

The second inside air intake unit 172 is an intake port for internal air circulation that takes in air inside the vehicle cabin and introduces it into the duct 174. No adsorbent is provided to adsorb hydrogen sulfide. A circulation path passing through the second inside air intake unit 172 is an example of a "second inside air circulation path" of the present disclosure.

The second inside air intake unit 172 is provided with an electromagnetic valve 172a for controlling conduction of the second inside air intake unit 172. The opening and closing of the electromagnetic valve 172a is controlled by the ECU 150.

The outside air intake unit 173 is an intake port for outside air circulation that takes in outside air and introduces it into the duct 174. The exhaust duct 175 exhausts the air that has passed through the duct 174 into the vehicle cabin.

The outside air intake unit 173 is provided with an electromagnetic valve 173a for controlling conduction of the outside air intake unit 173. The opening and closing of the electromagnetic valve 173a is controlled by the ECU 150.

The evaporator 176 and the heater core 177 are each provided in the duct 174. The evaporator 176 cools the air flowing through the duct 174. The heater core 177 raises the temperature of the air flowing through the duct 174. The evaporator 176 is connected to the refrigeration cycle 178.

The ECU 150 controls which of the first inside air intake unit 171, the second inside air intake unit 172, and the outside air intake unit 173 introduces air into the duct 174. Specifically, the ECU 150 controls the air circulation path by controlling the opening and closing states of each of the electromagnetic valves 171b, 172a, 173a.

Here, hydrogen sulfide generated in the battery case 90 is adsorbed by the desulfurizing agent 63 of the duct 60, but a part of the generated hydrogen sulfide may be discharged to the outside air from the respiratory membrane 61. Therefore, it is desired to suppress hydrogen sulfide discharged into the outside air from entering the vehicle cabin.

Therefore, in the electrified vehicle 100 of the present embodiment, when hydrogen sulfide is generated in the battery case 90, a blocking process is performed to separate the vehicle cabin from the outside air. The blocking process is a process executed by the ECU 150 based on the detection result of the hydrogen sulfide sensor 70. For example, the ECU 150 executes the above-described blocking process when the detection value of the hydrogen sulfide sensor 70 exceeds a predetermined threshold. Details of the blocking process will be described below.

### Vehicle Control Method

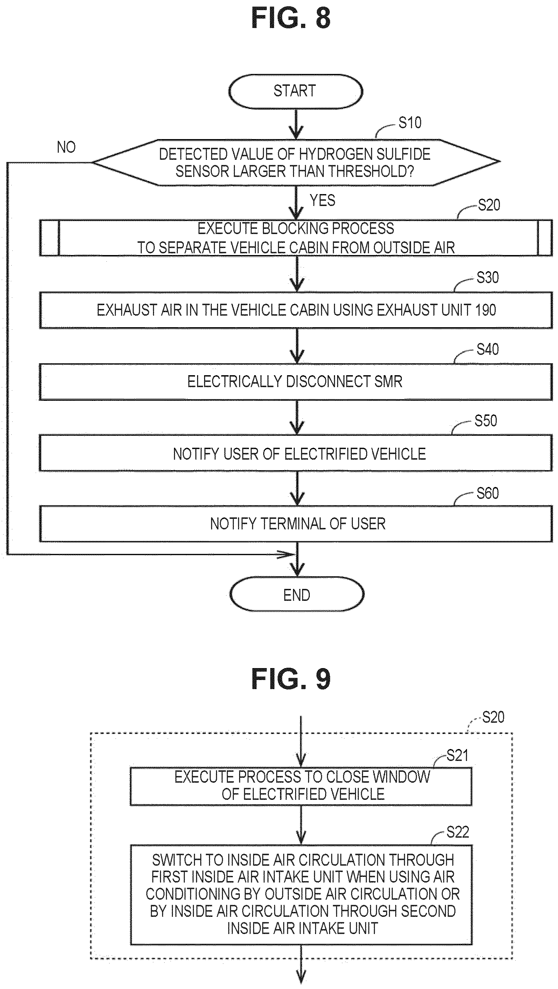

Next, a vehicle control method for the electrified vehicle 100 will be described with reference to FIGS. 8 and 9. The flow of FIG. 8 may be executed at predetermined intervals.

In step S10, the ECU 150 determines whether the detected value of the hydrogen sulfide sensor 70 is larger than a predetermined threshold. When the detected value is larger than the threshold (YES in S10), the process proceeds to step S20. When the detected value is equal to or less than the threshold (NO in S10), the process ends.

In step S20, the ECU 150 executes a blocking process to separate the vehicle cabin from the outside air. The blocking process includes the processes of steps S21 and S22 illustrated in FIG. 9.

In step S21, the ECU 150 executes the process to close at least one of the windows 180 (see FIG. 1). For example, the ECU 150 closes all of the windows 180. Specifically, the processor 151 of the ECU 150 outputs a signal for closing the window 180 to a drive unit (not illustrated) that drives the window 180.

In step S22, when air conditioning by outside air circulation or by inside air circulation through the second inside air intake unit 172 (see FIG. 6) is operating, the ECU 150 executes a process of switching to inside air circulation through the first inside air intake unit 171. Specifically, the processor 151 of the ECU 150 opens the electromagnetic valve 171b of the first inside air intake unit 171, and closes the electromagnetic valve 172a of the second inside air intake unit 172 and the electromagnetic valve 173a of the outside air intake unit 173.

Although FIG. 9 illustrates that the process of step S22 is executed after step S21, the order in which the above-described processes are executed is not limited to this. The process of step S21 may be executed after the process of step S22, or the above-described two processes may be executed simultaneously.

Referring again to FIG. 8, in step S30, the ECU 150 opens the exhaust unit 190 to execute a process of exhausting the air in the vehicle cabin. The process of step S30 may be executed before step S20, or may be executed simultaneously with the process of step S20.

In step S40, the ECU 150 executes a process for electrically disconnecting the SMR 111c (see FIG. 7).

In step S50, the ECU 150 executes a process to notify a user of the electrified vehicle 100 that the detected value of hydrogen sulfide has exceeded the threshold. For example, the ECU 150 causes the HMI device 120 of the electrified vehicle 100 to display a message indicating that detected value of hydrogen sulfide is high. Further, the ECU 150 may notify the user by lighting a lamp or by sound.

In step S60, the ECU 150 performs control to transmit information indicating that the detected value of hydrogen sulfide is high to the terminal (for example, a smart phone) of the user.

The processes of steps S40, S50, S60 may be performed simultaneously with each other. Further, the processes in steps S40 to S60 may be executed before steps S20, S30, or may be executed simultaneously with the processes in steps S20, S30.

As described above, in the present embodiment, when hydrogen sulfide is generated in the battery case 90, the blocking process is executed to separate the vehicle cabin from the outside air. Thereby, hydrogen sulfide discharged to the outside air can be prevented from entering the vehicle cabin.

In the embodiment described above, an example is described in which the processes of steps S40 to S60 are executed in response to actual generation of hydrogen sulfide, but the present disclosure is not limited to this. The processes of steps S40 to S60 may be executed even when hydrogen sulfide is not actually generated.

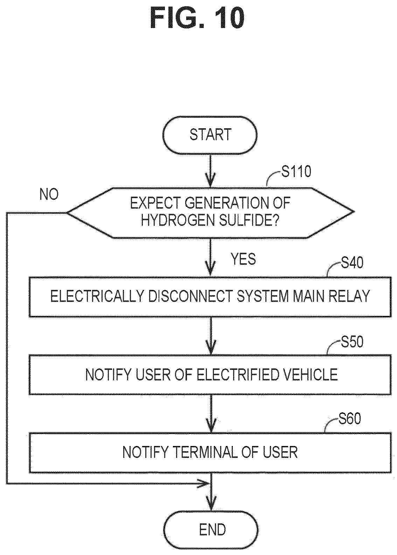

For example, in the example illustrated in FIG. 10, it is determined in step S110 whether generation of hydrogen sulfide is expected in the battery case 90. When the generation of hydrogen sulfide is expected (YES in S110), the process proceeds to steps S40 to S60, and when the generation of hydrogen sulfide is not expected (NO in S110), the processes of steps S40 to S60 are not executed. The blocking process of step S20 and the exhaust process of step S30 may be executed in response to the prediction of the generation of hydrogen sulfide. Also, both the determination in step S110 and the determination in step S10 may be performed.

Here, when an internal short circuit occurs in the solid electrolyte layer 3 (see FIG. 4B) of the unit cell 10, the amount of current in the unit cell 10 increases and the temperature rises. Hydrogen sulfide may also be generated due to breakage of the solid electrolyte layer 3. Therefore, by detecting an increase in the cell temperature of the unit cell 10 using a temperature sensor or the like, it is possible to predict the generation of hydrogen sulfide.

Also, when hydrogen sulfide is generated in the unit cell 10, the internal pressure of the exterior member 20 (see FIG. 5A) rises, which may cause a seal member (not illustrated) of the exterior member 20 to come off. Therefore, by arranging a pressure sensor so as to be adjacent to the seal member, it is possible to predict the generation of hydrogen sulfide based on the increase in the detected value of the pressure sensor.

Further, in the above-described embodiment, an example is described in which a process of closing all the windows 180 is executed as the blocking process, but the present disclosure is not limited to this. Only some of the windows 180 may be closed. Also, the window 180 may not be completely closed, but may be closed to the extent that a slight gap is created.

Further, in the above-described embodiment, an example is described in which a process of closing the window 180 and a process of switching the circulation path are executed as the blocking process, but the present disclosure is not limited to this. Only one of the process of closing the window 180 and the process of switching the circulation path may be executed.

Further, in the above-described embodiment, an example is described in which a circulation path passing through the first inside air intake unit 171 is formed when hydrogen sulfide is generated, but the present disclosure is not limited to this. A circulation path passing through the second inside air intake unit 172 may be formed when hydrogen sulfide is generated.

Further, in the above-described embodiment, an example is described in which an exhaust process by the exhaust unit 190 is performed in addition to the blocking process, but the present disclosure is not limited to this. The above-described exhaust process may not be performed.

Further, in the above-described embodiment, an example is described in which the processes of steps S40, S50, S60 are executed, but the present disclosure is not limited to this. One or two of the processes of steps S40, S50, S60 may be performed. Further, none of the processes of steps S40, S50, S60 may be executed.

The configurations (processes) of the above-described embodiment and each of the above-described modification examples may be combined with each other.

The embodiments disclosed this time should be considered to be illustrative in all respects and not restrictive. The scope of the present invention is indicated by the claims rather than the description of the embodiments described above.

## Claims

1. A vehicle (100) on which an all-solid-state battery (50) is mounted, the vehicle comprising:
the all-solid-state battery (50); and
a case (90) that accommodates the all-solid-state battery (50), wherein
when gas is generated in the case (90), a blocking process is configured to be executed to separate a vehicle cabin from outside air.

2. The vehicle according to claim 1, further comprising at least one window (180) that is openable and closable and is configured to block between the vehicle cabin and the outside air, wherein
the blocking process is configured to include a process of closing the at least one window (180).

3. The vehicle according to claim 1 or 2, further comprising an air conditioner (170) that is configured to adjust a room temperature in the vehicle cabin, wherein
the blocking process is configured to include a process of switching an air circulation path by the air conditioner (170) to an inside air circulation path.

4. The vehicle according to claim 3,
wherein the inside air circulation path includes a first inside air circulation path (171) in which a gas adsorbent that is configured to adsorb the gas is arranged and a second inside air circulation path (172) in which the gas adsorbent is not arranged, and
wherein the blocking process is configured to include a process of switching the air circulation path from the second inside air circulation path (172) to the first inside air circulation path (171).

5. The vehicle according to claim 1 or 2, further comprising an exhaust unit (190) that is configured to exhaust air in the vehicle cabin, wherein
when the gas is generated in the case (90), a process of exhausting the air in the vehicle cabin using the exhaust unit (190) is configured to be further executed.

6. The vehicle according to claim 5, wherein the exhaust unit (190) is provided at the bottom of the vehicle cabin.

7. The vehicle according to claim 1 or 2, wherein in response to an abnormality occurring, including at least one of a case in which the gas is configured to be generated in the case (90) and a case in which the gas is expected to be generated in the case (90), at least one of a process of electrically disconnecting a system main relay (111c) of the vehicle (100), a process of notifying a user of the vehicle (100) of the abnormality, and a process of notifying a terminal of the user of the abnormality is configured to be executed.

8. A control device (150) that controls a vehicle (100) on which an all-solid-state battery (50) is mounted, in which the vehicle (100) includes the all-solid-state battery (50) and a case (90) that accommodates the all-solid-state battery (50), the control device (150) comprising:
an acquisition unit (154) that acquires information indicating that gas is generated in the case (90); and
a signal output unit (151) that outputs a signal used to separate a vehicle cabin from outside air in response to acquisition of the information by the acquisition unit (154).

9. A vehicle control method that controls a vehicle (100) on which an all-solid-state battery (50) is mounted, where the vehicle (100) includes the all-solid-state battery (50) and a case (90) that accommodates the all-solid-state battery (50), the vehicle control method comprising:
detecting generation of gas in the case (90); and
separating a vehicle cabin from outside air when the gas generated in the case (90) is detected.

## Patentansprüche

1. Fahrzeug (100), an dem eine All-Solid-State-Batterie (50) montiert ist, wobei das Fahrzeug Folgendes umfasst:
die All-Solid-State-Batterie (50); und
ein Gehäuse (90), das die All-Solid-State-Batterie (50) aufnimmt, wobei,
wenn in dem Gehäuse (90) Gas erzeugt wird, ein Blockierungsprozess dazu ausgelegt ist, ausgeführt zu werden, um einen Fahrzeuginnenraum von Außenluft zu trennen.

2. Fahrzeug nach Anspruch 1, das ferner mindestens ein Fenster (180) umfasst, das geöffnet und geschlossen werden kann und zum Blockieren zwischen dem Fahrzeuginnenraum und der Außenluft ausgelegt ist, wobei der Blockierungsprozess so ausgelegt ist, dass er einen Prozess des Schließens des mindestens einen Fensters (180) beinhaltet.

3. Fahrzeug nach Anspruch 1 oder 2, das ferner eine Klimaanlage (170) umfasst, die dazu ausgelegt ist, eine Raumtemperatur in dem Fahrzeuginnenraum anzupassen,
wobei
der Blockierungsprozess so ausgelegt ist, dass er einen Prozess des Umschaltens eines Luftzirkulationspfads durch die Klimaanlage (170) auf einen Innenluftzirkulationspfad beinhaltet.

4. Fahrzeug nach Anspruch 3,
wobei der Innenluftzirkulationspfad einen ersten Innenluftzirkulationspfad (171), in dem ein Gasadsorptionsmittel, das zum Adsorbieren des Gases ausgelegt ist, angeordnet ist, und einen zweiten Innenluftzirkulationspfad (172), in dem das Gasadsorptionsmittel nicht angeordnet ist, umfasst, und
wobei der Blockierungsprozess so ausgelegt ist, dass er einen Prozess des Umschaltens des Luftzirkulationspfads von dem zweiten Innenluftzirkulationspfad (172) zu dem ersten Innenluftzirkulationspfad (171) beinhaltet.

5. Fahrzeug nach Anspruch 1 oder 2, das ferner eine Ablasseinheit (190) umfasst, die dazu ausgelegt ist, Luft in dem Fahrzeuginnenraum abzulassen, wobei
wenn das Gas in dem Gehäuse (90) erzeugt wird, ein Prozess des Ablassens der Luft in dem Fahrzeuginnenraum unter Verwendung der Ablasseinheit (190) dazu ausgelegt ist, ferner ausgeführt zu werden.

6. Fahrzeug nach Anspruch 5, wobei die Ablasseinheit (190) am Boden des Fahrzeuginnenraums bereitgestellt ist.

7. Fahrzeug nach Anspruch 1 oder 2, wobei als Reaktion auf eine auftretende Anomalie, einschließlich mindestens eines von einem Fall, in dem das Gas dazu ausgelegt ist, in dem Gehäuse (90) erzeugt zu werden, und einem Fall, in dem erwartet wird, dass das Gas in dem Gehäuse (90) erzeugt wird, mindestens eines von einem Prozess des elektrischen Trennens eines Systemhauptrelais (111c) des Fahrzeugs (100), einem Prozess des Benachrichtigens eines Benutzers des Fahrzeugs (100) über die Anomalie und einem Prozess des Benachrichtigens eines Endgeräts des Benutzers über die Anomalie dazu ausgelegt ist, ausgeführt zu werden.

8. Steuervorrichtung (150), die ein Fahrzeug (100) steuert, an dem eine All-Solid-State-Batterie (50) montiert ist, wobei das Fahrzeug (100) die All-Solid-State-Batterie (50) und ein Gehäuse (90), das die All-Solid-State-Batterie (50) aufnimmt, beinhaltet, wobei die Steuervorrichtung (150) Folgendes umfasst:
eine Erfassungseinheit (154), die Informationen erfasst, die angeben, dass Gas in dem Gehäuse (90) erzeugt wird; und
eine Signalausgabeeinheit (151), die ein Signal ausgibt, das zum Trennen eines Fahrzeuginnenraums von Außenluft als Reaktion auf das Erfassen der Informationen durch die Erfassungseinheit (154) verwendet wird.

9. Fahrzeugsteuerverfahren, das ein Fahrzeug (100) steuert, an dem eine All-Solid-State-Batterie (50) montiert ist, wobei das Fahrzeug (100) die All-Solid-State-Batterie (50) und ein Gehäuse (90), das die All-Solid-State-Batterie (50) aufnimmt, beinhaltet, wobei das Fahrzeugsteuerverfahren Folgendes umfasst:
Detektieren der Erzeugung von Gas in dem Gehäuse (90); und
Trennen eines Fahrzeuginnenraums von Außenluft, wenn das in dem Gehäuse (90) erzeugte Gas detektiert wird.

## Revendications

1. Véhicule (100) sur lequel est montée une batterie tout-solide (50), le véhicule comprenant :
la batterie tout-solide (50) ; et
un boîtier (90) qui loge la batterie tout-solide (50),
lorsque du gaz est généré dans le boîtier (90), un processus de blocage étant conçu pour être exécuté afin de séparer un habitacle de véhicule de l'air extérieur.

2. Véhicule selon la revendication 1, comprenant en outre au moins une fenêtre (180) qui peut être ouverte et fermée et qui est conçue pour séparer l'habitacle de véhicule de l'air extérieur,
le processus de blocage étant conçu pour inclure un processus de fermeture de l'au moins une fenêtre (180).

3. Véhicule selon la revendication 1 ou 2, comprenant en outre un climatiseur (170) qui est conçu pour ajuster une température ambiante dans l'habitacle de véhicule,
le processus de blocage étant conçu pour inclure un processus de commutation d'un trajet de circulation d'air par le climatiseur (170) en un trajet de circulation d'air intérieur.

4. Véhicule selon la revendication 3,
le trajet de circulation d'air intérieur comprenant un premier trajet de circulation d'air intérieur (171) dans lequel se trouve un adsorbant de gaz conçu pour adsorber le gaz et un second trajet de circulation d'air intérieur (172) dans lequel l'adsorbant de gaz ne se trouve pas, et
le processus de blocage étant conçu pour inclure un processus de commutation du trajet de circulation d'air du second trajet de circulation d'air intérieur (172) au premier trajet de circulation d'air intérieur (171).

5. Véhicule selon la revendication 1 ou 2, comprenant en outre une unité d'échappement (190) qui est conçue pour évacuer l'air dans l'habitacle de véhicule,
lorsque le gaz est généré dans le boîtier (90), un processus d'évacuation de l'air dans l'habitacle de véhicule à l'aide de l'unité d'échappement (190) étant conçu pour être exécuté ultérieurement.

6. Véhicule selon la revendication 5, l'unité d'échappement (190) étant fournie dans la partie inférieure de l'habitacle de véhicule.

7. Véhicule selon la revendication 1 ou 2, en réponse à une anomalie survenant, comprenant au moins l'un d'un boîtier dans lequel le gaz est conçu pour être généré dans le boîtier (90) et d'un boîtier dans lequel le gaz est attendu pour être généré dans le boîtier (90), au moins l'un d'un processus de déconnexion électrique d'un relais principal de système (111c) du véhicule (100), d'un processus de notification de l'anomalie à un utilisateur du véhicule (100) et d'un processus de notification de l'anomalie à un terminal de l'utilisateur étant conçu pour être exécuté.

8. Dispositif de commande (150) qui commande un véhicule (100) sur lequel est montée une batterie tout-solide (50), le véhicule (100) comprenant la batterie tout-solide (50) et un boîtier (90) qui accueille la batterie tout-solide (50), le dispositif de commande (150) comprenant :
une unité d'acquisition (154) qui acquiert des informations indiquant que du gaz est généré dans le boîtier (90) ; et
une unité de sortie de signal (151) qui émet un signal utilisé pour séparer un habitacle de véhicule de l'air extérieur en réponse à l'acquisition des informations par l'unité d'acquisition (154).

9. Procédé de commande de véhicule qui commande un véhicule (100) sur lequel est montée une batterie tout-solide (50), le véhicule (100) comprenant la batterie tout-solide (50) et un boîtier (90) qui accueille la batterie tout-solide (50), le procédé de commande de véhicule comprenant les étapes consistant à :
détecter une génération de gaz dans le boîtier (90) ; et
séparer un habitacle de véhicule de l'air extérieur lorsque le gaz généré dans le boîtier (90) est détecté.
